(19) Europäisches Patentamt / European Patent Office / Office européen des brevets

(11) **EP 2 138 242 A2**

(12) **EUROPÄISCHE PATENTANMELDUNG**

(43) Veröffentlichungstag:
   **30.12.2009  Patentblatt 2009/53**

(51) Int Cl.:
   **B07C 5/34** *(2006.01)*     **G06K 9/64** *(2006.01)*

(21) Anmeldenummer: **09163081.4**

(22) Anmeldetag: **18.06.2009**

(84) Benannte Vertragsstaaten:
   **AT BE BG CH CY CZ DE DK EE ES FI FR GB GR HR HU IE IS IT LI LT LU LV MC MK MT NL NO PL PT RO SE SI SK TR**

(30) Priorität: **26.06.2008  DE 102008029952**

(71) Anmelder: **Wincor Nixdorf International GmbH 33106 Paderborn (DE)**

(72) Erfinder: **Maschotta, Ralph 33106, Paderborn (DE)**

(74) Vertreter: **2K Patentanwälte Blasberg Kewitz & Reichel Partnerschaft Corneliusstraße 18 60325 Frankfurt am Main (DE)**

(54) **Verfahren und Vorrichtung zum Erkennen von Transportbehältnissen**

(57) Vorgeschlagen wird ein Verfahren zum Erkennen von Transportbehältnissen, insbesondere von Getränkekästen und/oder -flaschen, die jeweils mit mindestens einer grafischen Kennzeichnung versehen sind. Dabei wird von der grafischen Kennzeichnung, die z.B. ein Label oder Logo sein kann, eine digitale Bildaufnahme gemacht und daraus eine Bilddatenmatrix erstellt. Aus dieser wird eine Bilddatenliste (PICL) erstellt. Dann wird mittels einer Merkmalslistenbasierten Kreuzkorrelation die Bilddatenliste (PICL) mit einer Musterdatenliste (TMPL) verknüpft, die eine Merkmalsliste für ein optisches Erkennungsmerkmal repräsentiert, um zu prüfen, ob in der grafischen Kennzeichnung das optische Erkennungsmerkmal vorhanden ist. Dieses Verfahren ist besonders gut zur schnellen und sicheren Erkennung von Transportbehältnissen in Leergutrückgabesystemen bzw. - automaten geeignet.

Fig. 6

EP 2 138 242 A2

**Beschreibung**

Die Erfindung betrifft ein Verfahren zum Erkennen von Transportbehältnissen gemäß dem Oberbegriff des Anspruchs 1 sowie eine das Verfahren ausführende Vorrichtung.

Insbesondere betrifft die Erfindung ein Verfahren zum Erkennen von Transportbehältnissen in Gestalt von Getränkekästen und sonstigem Leergut sowie eine Vorrichtung in Gestalt eines Leergutrückgabesystems.

Bei der optischen Erkennung von Transportbehältnissen, wie sie insbesondere in Leergutrückgabesystemen durchgeführt wird, kommen üblicherweise Kameras und Bildverarbeitungssysteme zum Einsatz, die grafische Kennzeichnungen, wie z.B. Schriftzüge, Bildelemente bzw. sog. Labels, mit denen die Transportbehältnisse versehen sind, erkennen sollen. Dazu machen die Kameras fotografische Aufnahmen, die dann in der Bildverarbeitung anhand von Mustererkennung ausgewertet werden, um die jeweilige Kennzeichnung, im weiteren auch kurz Logo genannt, eindeutig zu erkennen. Insbesondere für die zuverlässige Klassifizierung von Getränkekästen, die sich häufig nur durch das jeweilige Logo unterscheiden, ist es erforderlich, dass das jeweilige Logo sicher und eindeutig erkannt wird.

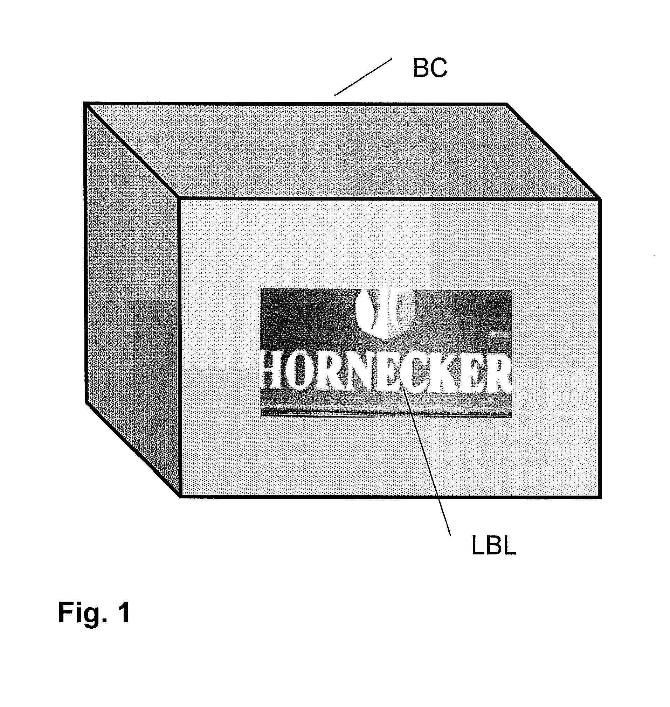

Anhand der Fig. 1 wird die Ausgangssituation veranschaulicht:

Die Fig. 1 zeigt schematisch ein als Getränkekasten BC gestaltetes Transportbehältnis, das als Leergut in ein (nicht dargestelltes) Leergutrückgabesystem eingebracht wird und dort erkannt werden soll. Auf dem Getränkekasten BC sind grafische Kennzeichnungen LBL (kurz: Logos) in Form von Schriftzügen und Bildzeichen angebracht, die einen Hinweis auf die Herkunft oder den Eigentümer des Getränkekastens (hier eine Brauerei) angeben und automatisch sicher erkannt werden sollen.

Üblicherweise basiert die Erkennung solcher Logos auf der Verwendung von Abstandsmaßen oder neuronalen Netzen, die zuvor berechnete Merkmale auswerten. Jedoch stoßen diese Verfahren an ihre Grenzen, wenn die Logos bzw. Kennzeichnungen verschiedener Eigentümer sich sehr ähnlich sind. Insbesondere hier kommt es darauf an, klar unterscheidbare Erkennungsmerkmale zu finden. Dazu könnten Kreuzkorrelationsverfahren verwendet werden, um in den Bildaufnahmen nach eindeutigen Erkennungsmerkmalen zu suchen. Jedoch sind herkömmliche Kreuzkorrelationsverfahren sehr rechenintensiv und können nicht ohne erheblichen Aufwand zeitnah oder gar in Echtzeit durchgeführt werden. Somit sind die herkömmlichen Verfahren nicht für den Einsatz in Automatensystemen, wie z.B. Leergutrückgabesystemen geeignet.

Wünschenswert wäre es, ein Verfahren zum Erkennen von Transportbehältnissen zu haben, das schnell ausgeführt werden kann und somit auch für zeitkritische Einsatzfälle geeignet ist. Insbesondere werden ein kostengünstig zu realisierendes Verfahren und eine entsprechende Vorrichtung gesucht, mit denen eine schnelle und zuverlässige Suche nach eindeutigen Erkennungsmerkmalen ermöglicht wird

Daher ist es Aufgabe der vorliegenden Erfindung, die oben genannten Probleme des Standes der Technik vorteilhaft zu überwinden. Insbesondere soll eine schnell arbeitende und technisch gut zu realisierende Lösung zur optischen Erkennung von Transportbehältnissen vorgeschlagen werden.

Gelöst wird die Aufgabe durch ein Verfahren mit den Merkmalen des Anspruchs 1 und ebenso durch eine Vorrichtung mit den Merkmalen des nebengeordneten Anspruchs.

Demnach wird vorgeschlagen, dass zumindest von dem Teil des Transportbehältnisses, der mit der grafischen Kennzeichnung versehen ist, eine digitale Bildaufnahme gemacht wird, dass mittels der digitalen Bildaufnahme oder einer Bildverarbeitung davon eine Bilddatenmatrix erstellt wird, dass aus der Bilddatenmatrix eine Bilddatenliste erstellt wird, und dass mittels einer Merkmalslisten-basierten Kreuzkorrelation die Bilddatenliste mit einer Musterdatenliste verknüpft wird, die eine Merkmalsliste für ein optisches Erkennungsmerkmal repräsentiert, um zu prüfen, ob in der grafischen Kennzeichnung das optische Erkennungsmerkmal vorhanden ist.

Es wird also durch eine Merkmalslisten-basierte Kreuzkorrelation geprüft, ob das jeweilige Transportbehältnis eine grafische Kennzeichnung trägt, die ein Erkennungsmerkmal aufweist, dass dem einer Mustervorlage (Template) entspricht. Die Mustervorlage bzw. die davon extrahierte und erzeugte Musterdatenliste kann beispielsweise aus einem besonders prägnanten und sicher identifizierbaren Teilbereich des Labels LBL gewonnen werden, wie z.B. dem Wappen eines Brauereilogos oder dergleichen. Die Musterdatenliste entspricht dabei einer für die Mustervorlage (Template) typischen Merkmalsliste, die im Rahmen einer Merkmalslisten-basierte Kreuzkorrelation verwendet werden kann. Die erzeugte Bilddatenliste wiederum entspricht einer sehr stark datenreduzierten Repräsentanz der digitalen Bildaufnahme des jeweiligen Logos und wird im Rahmen der Merkmalslisten-basierten Kreuzkorrelation direkt mit der Musterdatenliste verknüpft.

Dadurch wird eine sehr schnelle und zuverlässige Erkennung und Klassifizierung von Transportbehältnissen, insbesondere von Getränkekästen, erreicht. Die vorgeschlagene Lösung ermöglicht es, die Daten-Verknüpfung sehr stark zu parallelisieren und somit auf mehrere Rechenkerne aufzuteilen. Die Erfindung kann aber auch auf einzelnen Prozessoren oder programmierbaren Schaltkreisen, wie z.B. auf DSPs oder FPGAs, gut implementiert werden und ist somit sehr für den industriellen Einsatz geeignet. Insbesondere können Logos, aber auch andere und durchaus große Bilder, schnell und sicher erkannt werden.

Vorteilhafterweise wird aus der Bilddatenmatrix die Bilddatenliste erstellt, indem jeweils nur für solche Koordinaten-Paare der Bilddatenmatrix ein Eintrag in die Bilddatenliste erfolgt, die einen Bildpunkt angeben, der einen Datenwert ungleich Null aufweist.

Es kann vorteilhafterweise mittels der Verknüpfung der Bilddatenliste mit der Musterdatenliste eine Ergebnisdatenmatrix erstellt werden, die gleich ist zu dem Ergebnis aus einer herkömmlichen Kreuzkorrelation der Bilddatenmatrix mit einer Musterdatenmatrix, aus der die Musterdatenliste erstellbar ist. Dabei können die Bilddatenliste und die Musterdatenliste zeilen- oder spaltenweise Eintragungen aufweisen, die jeweils Koordinaten-Paare und mindestens einen zugehörigen Datenwert angeben. In diesem Zusammenhang ist es von Vorteil, wenn die Bilddatenliste insbesondere zeilenweise mit der Musterdatenliste verknüpft wird, indem jeweils von den Koordinatenwerten eines Koordinaten-Paares der Bilddatenliste jeweils die Koordinatenwerte eines Koordinaten-Paares der Musterdatenliste subtrahiert werden, um jeweils ein Koordinaten-Paar in einer bzw. der Ergebnisdatenmatrix zu ermitteln, um dort einen Ergebnisdatenwert einzutragen, der durch Summation von Zwischenergebnissen ermittelt wird, die sich jeweils aus einer Verknüpfung, insbesondere Multiplikation oder absoluter Differenzbildung, des jeweiligen Datenwertes aus der Bilddatenliste mit dem entsprechenden Datenwert aus der Musterdatenliste ergeben.

Außerdem können die Zwischenergebnisse zeitgleich über parallelisierte Rechenwege ermittelt werden und anschließend können die Zwischenergebnisse zur Ermittlung der Ergebnisdatenwerte zusammengeführt, insbesondere addiert, werden.

Die Bildverarbeitung zur Erstellung der Bilddatenmatrix umfasst vorzugsweise eine Merkmalsextraktion, insbesondere eine Kantendetektion, der Bilddaten der digitalen Bildaufnahme.

Auch kann die Musterdatenliste mittels einer Extraktion von Bilddaten aus einer Mustervorlage für die grafische Kennzeichnung oder aus der jeweils vorliegenden grafischen Kennzeichnung selbst erzeugt werden. In diesem Zusammenhang umfasst die die Erzeugung der Musterdatenliste vorzugsweise mindestens einen der folgenden Schritte:

- von der Mustervorlage bzw. der grafischen Kennzeichnung selbst wird eine Musteraufnahme gemacht;
- die Musteraufnahme wird einer Mittelung bzw. Filterung unterzogen ;
- aus der insbesondere gemittelten Musteraufnahme wird mittels einer Kantendetektion ein Merkmalsbild erstellt;
- aus dem Merkmalsbild wird das Erkennungsmerkmal extrahiert und eine entsprechende Musterbilddatenmatrix erstellt,
- aus der Musterbilddatenmatrix wird die Musterbilddatenliste erstellt, indem jeweils nur für solche Koordinaten-Paare der Musterbilddatenmatrix ein Eintrag in die Musterbilddatenliste erfolgt, die einen Bildpunkt angeben, der einen Datenwert ungleich Null aufweist.

Die Erfindung wird nun eingehend anhand von Ausführungsbeispielen beschrieben, wobei auf die folgenden beiliegenden schematischen Zeichnungen Bezug genommen wird:

Fig. 1    zeigt einen zu erkennenden Getränkkasten mit Label bzw. Logo;

Fig. 2a    zeigt ein Ablaufdiagramm für das erfindungsgemäße Verfahren, mit dem Getränkkästen und dergleichen anhand von Logos erkannt werden, wobei insbesondere Teilschritte zur Erzeugung einer Bilddatenliste dargestellt sind;

Fig. 2b    zeigt zum Verfahren nach Fig. 1 insbesondere Teilschritte für eine zuvor durchgeführte Erzeugung einer Musterdatenliste;

Fig. 3    bezieht sich auf Fig. 2b und zeigt eine im erfindungsgemäßen Verfahren durchgeführte schrittweise Extraktion einer Mustervorlage für die Erzeugung der Musterdatenliste;

Fig. 4    veranschaulicht den Rechenaufwand bei einer herkömmlichen Kreuzkorrelation von einer Bilddatenmatrix mit einer Musterbilddatenmatrix;

Fig. 5    zeigt eine im erfindungsgemäßen Verfahren durchgeführte Umwandlung einer Bild- und einer Musterbilddatenmatrix in eine Bild- bzw. Musterbilddatenliste;

Fig. 6    veranschaulicht im Vergleich zur Fig. 4 das mittels Merkmalslisten-basierter Kreuzkorrelation erzielte Ergebnis.

Fig. 7 a)-n)    veranschaulichen das Prinzip der Merkmalslisten-basierter Kreuzkorrelation.

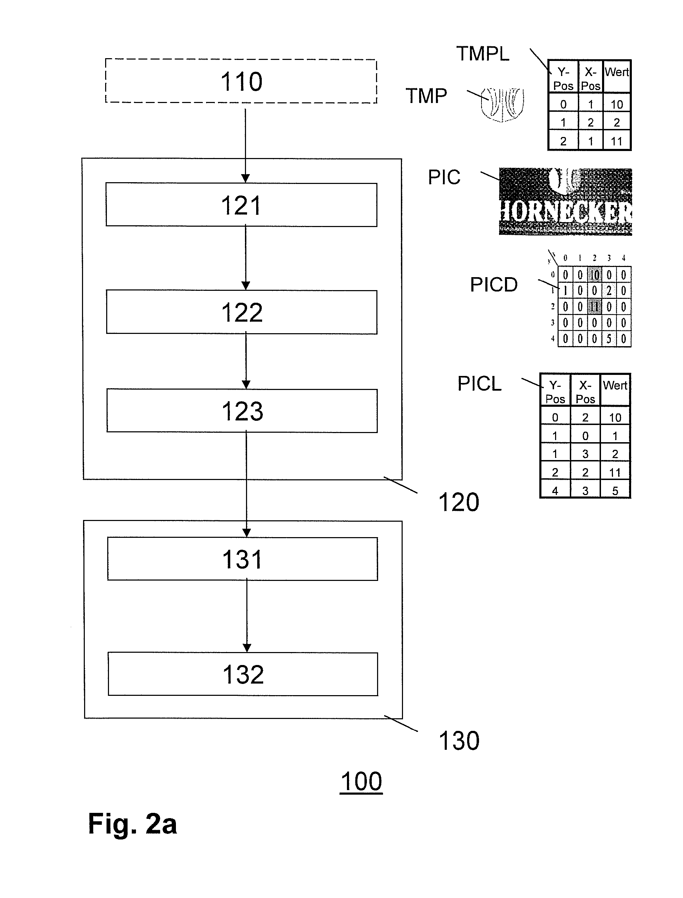

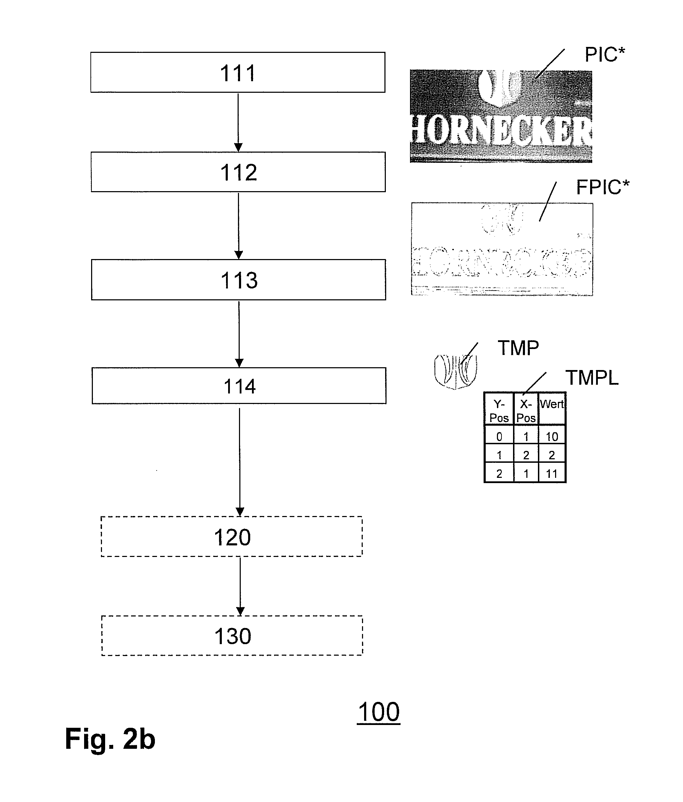

Ausgehend von der in Fig. 1 veranschaulichten Ausgangssituation, bei der beispielsweise das Logo oder Label LBL eines Getränkekastens BC erkannt werden soll, zeigen die Fig. 2a und 2b die Schritte eines erfindungsgemäßen Verfahrens 100, dass in vorteilhafter Weise dieses Problem wie folgt löst:

In einem später noch eingehend beschriebenen Schritt 110 wird eine Musterbilddatenliste TMPL erzeugt, um für die hier vorgeschlagene Merkmalslisten-basierte Kreuzkorrelation (s. insbesondere Schritt 130) verwendet zu werden.

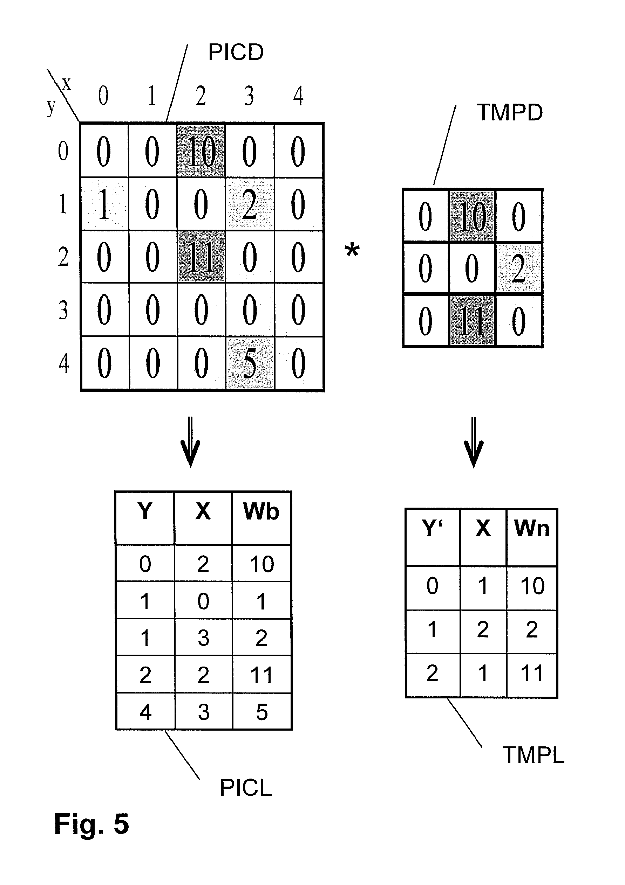

In einem Schritt 120, der die Teilschritte 121 bis 123 umfasst, wird zunächst eine Bildaufnahme des zu erkennenden Getränkekastens bzw. seines Logos gemacht und daraus eine Bilddatenliste PICL erzeugt. Dazu wird zunächst in einem Teilschritt 121 die eigentliche digitale Bildaufnahme PIC des Logos gemacht. In einem Teilschritt 122 wird daraus eine Bilddatenmatrix PICD erstellt, deren Koordinaten x und y den jeweiligen Bildpunkt mit einen dazugehörigen Datenwert Wb angeben. Beispielsweise wird eine Schwarz-Weiß-Bildaufnahme mit einer 8 Bit Auflösung gemacht, so dass der jeweilige Datenwert Wb einem Graustufenwert zwischen 0 und 255 entspricht. In einem weiteren Teilschritt 123 wird nun aus der Bilddatenmatrix PICD informationsverlustfrei eine stark reduzierte Bilddatenliste PICL erzeugt. Dies wird noch näher anhand der Fig. 5 beschrieben.

Mit Hilfe der erzeugten Bilddatenliste PICL und der bereit gestellten Musterbilddatenliste TMPL wird dann im Schritt 130 eine Merkmalslisten-basierte Kreuzkorrelation durchgeführt, die im Ergebnis dieselbe Qualität wie eine herkömmliche Kreuzkorrelation aufweist, die aber aufgrund der erstellten Datenlisten PICL und TMPL und ihrer erfindungsgemäßen Verknüpfung eine parallelisierte Datenverarbeitung erlaubt und somit sehr viel schneller ausgeführt werden kann. Somit kann eine besonders schnelle und effektive Erkennung des jeweiligen Getränkekastens anhand seines Logos oder ähnlicher grafischer Kennzeichnungen erzielt werden.

Bevor auf die Logo-Erkennung mittels Merkmalslisten-basierter Kreuzkorrelation näher eingegangen wird, soll hier zunächst anhand der Fig. 2b die Erstellung bzw. Erzeugung der Musterbilddatenliste TMPL näher beschrieben werden:

Diese kann im Rahmen der Installation der erfindungsgemäßen Vorrichtung, die vorzugsweise ein Leergutrückgabesystem ist, einmalig oder auch nur von Zeit zur Zeit durchgeführt werden und erfolgt z.B. im Verfahrenschritt 110, der die Teilschritte 111 bis 114 umfasst.

Zunächst wird im Teilschritt 111 von einer Mustervorlage, die eine Idealbildaufnahme des Labels darstellt, oder auch von einem bereits an einem Getränkekasten befindliches Label eine digitale Musterbildaufnahme PIC* gemacht. Alternativ kann eine entsprechende Musterbilddatei als Vorlage verwendet werden.

Dann wird im Teilschritt 112 daraus ein Merkmalsbild FPIC* erstellt, d.h. ein Bild, das möglichst prägnant die für das Label typische grafische Struktur wiedergibt. Das Merkmalsbild FPIC* wird z.B. durch Kantendetektion aus dem Musterbild PIC* erzeugt. Im Merkmalsbild FPIC* erscheinen dann insbesondere die Umrisse von Logo-Elementen und Schriftzügen, die das Label prägen.

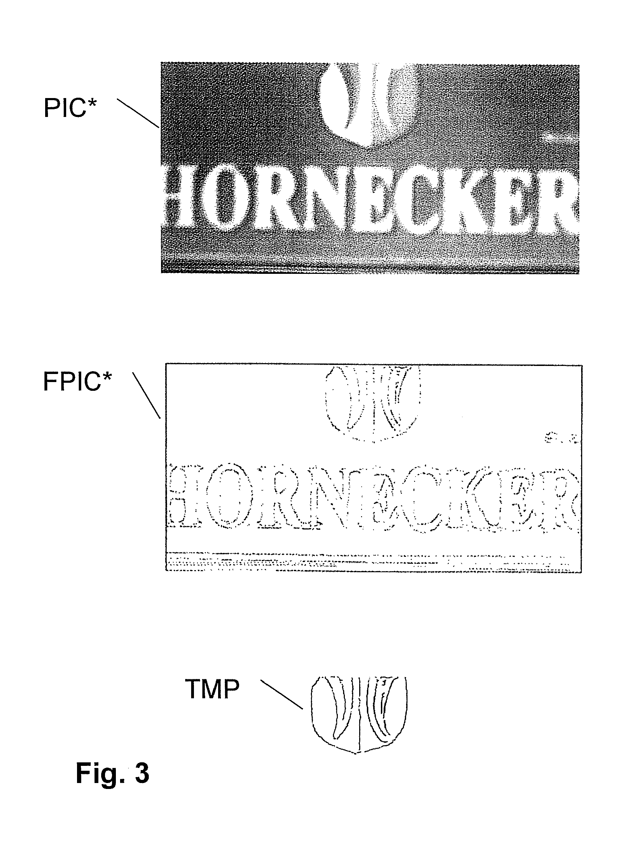

In einem nächsten Teilschritt 113 wird dann ein Bereich aus dem Merkmalsbild FPIC* extrahiert, wie hier z.B. ein Wappen. Es kann auch ein anderes oder ähnliches charakteristisches Bildelement sein. Dieses wird als optisches Erkennungsmerkmal bzw. Template TMP für die spätere Erkennung (Schritt 130) verwendet. Das Template dient somit als Musterbild. Die Fig. 3 veranschaulicht ebenfalls die Erzeugung eines solchen Musterbildes TMP.

Um die spätere Erkennung von Getränkekästen anhand einer Merkmalslisten-basierten Kreuzkorrelation durchführen zu können, wird das Musterbild TMP bzw. seine entsprechende Musterbilddatenmatrix TMPD in eine erfindungsgemäße Listenform gebracht und als Musterdatenliste TMPL bereit gestellt. Dieser Vorgang wird noch eingehender anhand der Fig. 5 beschrieben.

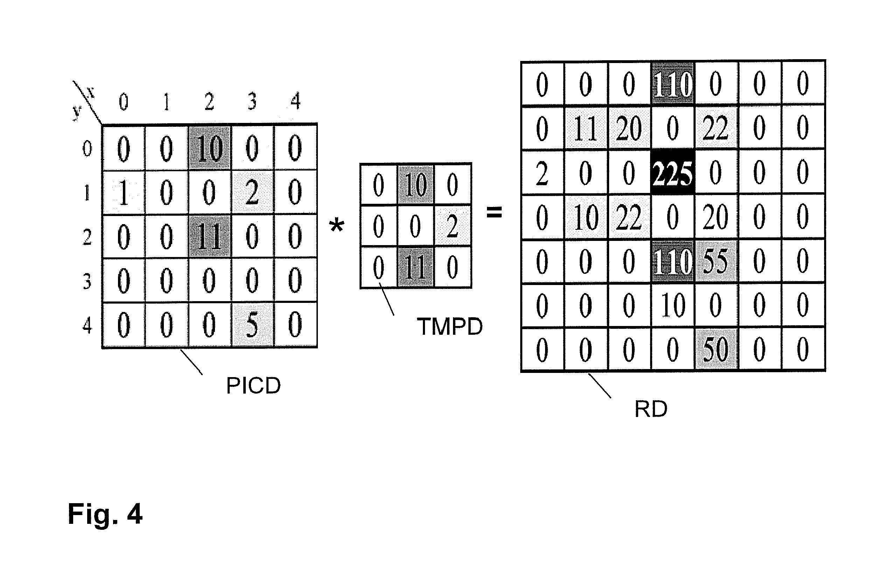

Zunächst soll anhand der Fig. 4 aufgezeigt werden, wie eine herkömmliche Kreuzkorrelation durchgeführt werden müsste und welcher Rechenaufwand damit verbunden wäre:

In der Fig. 4 ist exemplarisch in vereinfachter Form die Bilddatenmatrix PICD dargestellt, die die digitale Bildaufnahme eines Logos bzw. Labels LBL repräsentiert. Weiterhin ist die Musterbilddatenmatrix TMPD dargestellt, die als Referenz das Musterbild bzw. Template TMP repräsentiert. Dieses soll in der Bildaufnahme wieder gefunden werden, um den Getränkekasten zu identifizieren. Üblicherweise wird dazu mittels einer Kreuzkorrelation der beiden Matrizen PICD mit TMPD eine Ergebnisbilddatenmatrix RD berechnet, die dann anzeigt, wie stark und an welcher Bildpunkposition die Bildaufnahme PIC mit dem Musterbild TMP korreliert. Bei dem hier vereinfacht dargestellten Beispiel wird eine MxM große Matrix PICD (M=5) mit der NxN (N=3) großen Matrix TMPD verknüpft, so dass sich eine (M+N-1)x(M+N-1) große Matrix RD ergibt. Im hier gezeigten Beispiel ist anhand der Ergebnisbildmatrix RD zu erkennen, dass dort an einer Stelle (Koordinaten X=4 und Y=3) ein deutliche Singularität in Gestalt eines sehr hohen Ergebniswertes von 225 auftritt. Dies zeigt für diese Stelle eine sehr starke Korrelation der Bildaufnahme PIC mit dem Musterbild TMP an, woraus sich ergibt, dass in der Bildaufnahme PIC das Musterbild TMP im mittleren, oberen Bereich der Bildpunkte vorhanden ist. Damit wird der entsprechende Getränkekasten eindeutig identifiziert.

Allerdings erfordert die in Fig. 4 veranschaulichte herkömmliche Kreuzkorrelation eine aufwendige Berechnung von MxM x NxN, also 5x5 x 3x3 = 25 x 9 = 225 Bilddatenwerten. Die resultierende Ergebnisdatenmatrix RD hat dann M+N-1 Spalten bzw. Zeilen, hat hier also 7x7 Einträge.

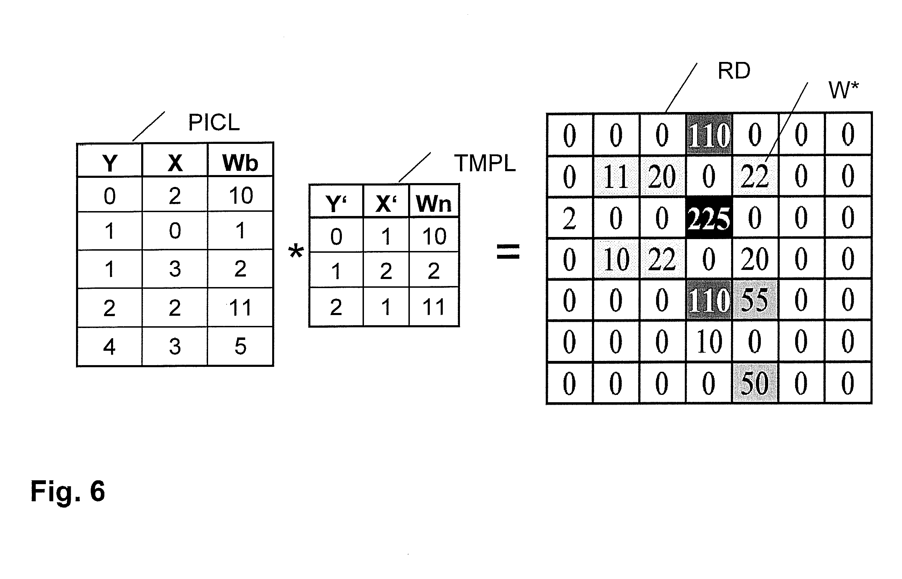

Gemäß der vorliegenden Erfindung wird hier nun eine wesentlich schnellere Verknüpfung in Form einer Merkmalslisten-basierten Kreuzkorrelation vorgeschlagen, die im Schritt 130 (s. Fig. 2a/b) durchgeführt und nachfolgend anhand der Fig. 5 und 6 sowie Fig. 7 a) bis n) detailliert beschrieben wird:

Zunächst wird die Bilddatenmatrix PICD in eine Listenform gebracht und in eine Bilddatenliste PICL umgewandelt. Jede Zeile der Bilddatenliste PICL enthält folgende Angaben: Die X- und Y-Koordinaten für einen Bildpunkt und den dort angegebenen Datenwert Wb. Dabei werden nur solche Koordinaten-Paare in die Liste PICL eingetragen, die einen Datenwert Wb ungleich Null aufweisen. Somit ergibt sich, ohne jeglichen Verlust an Information, eine wesentlich kleinere Datenmenge.

Dasselbe wurde zuvor mit der Musterbilddatenmatrix TMPD durchgeführt, die somit in Form einer kurzen Musterdatenbildliste TMPL vorliegt, wobei dort ebenfalls nur Datenwerte Wh ungleich Null aufgelistet sind.

Wie die Fig. 5 veranschaulicht, wird eine Verknüpfung der beiden Listen PICL mit TMPL durchgeführt, die hier als Merkmalslisten-basierte Kreuzkorrelation bezeichnet wird und die ebenfalls, aber mit deutlich geringerem Rechenaufwand, zu demselben Ergebnis, nämlich zu der Ergebnisdatenmatrix RD, führt.

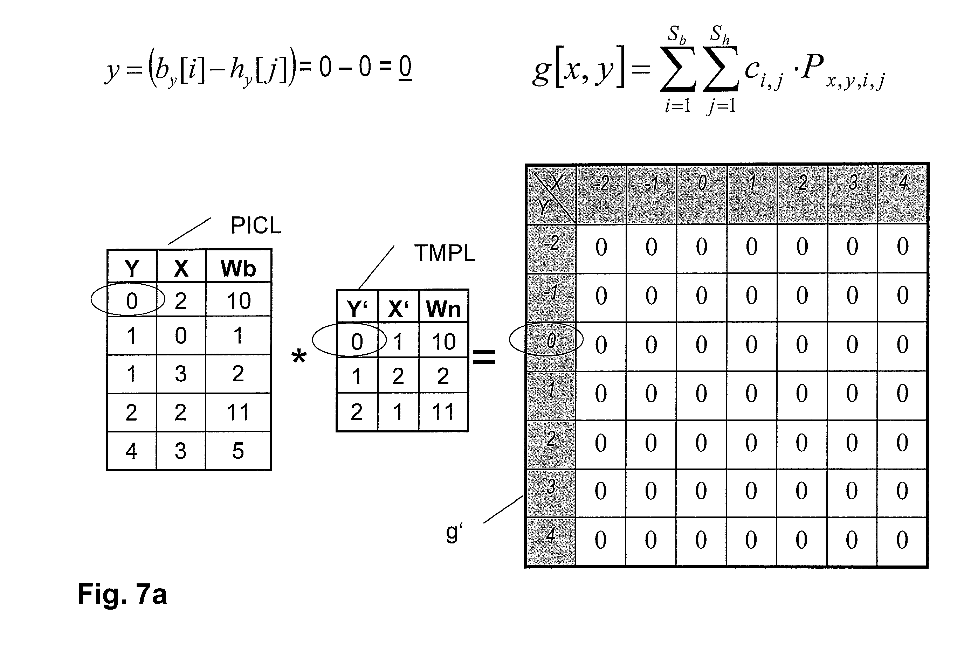

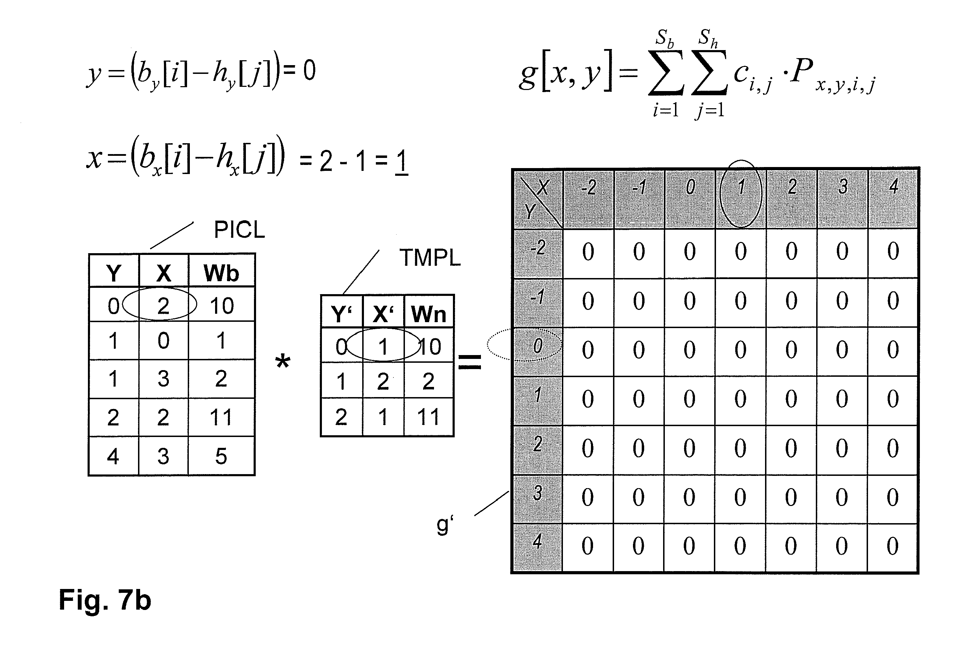

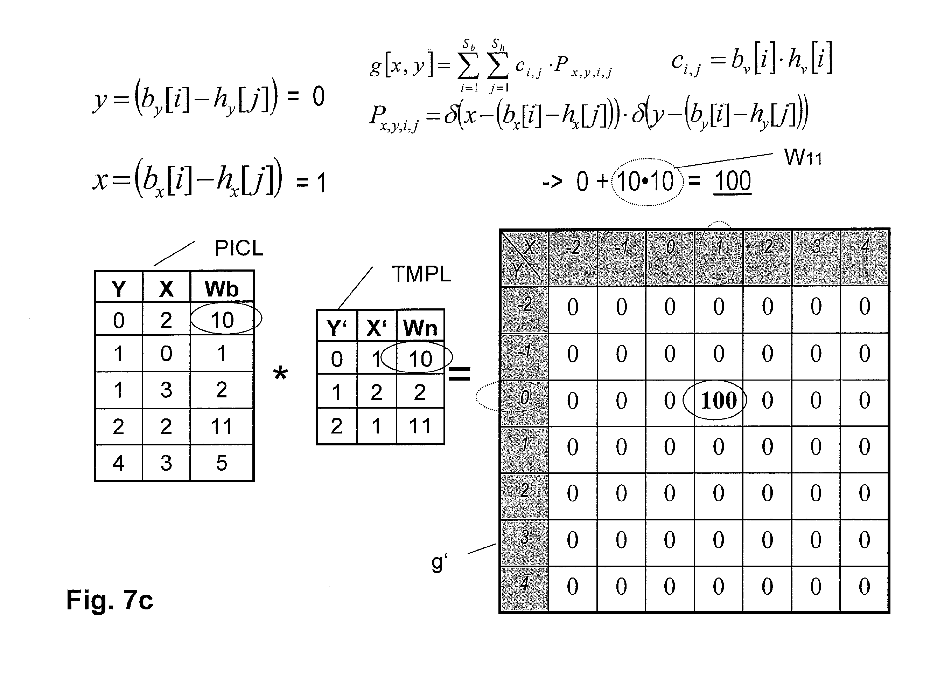

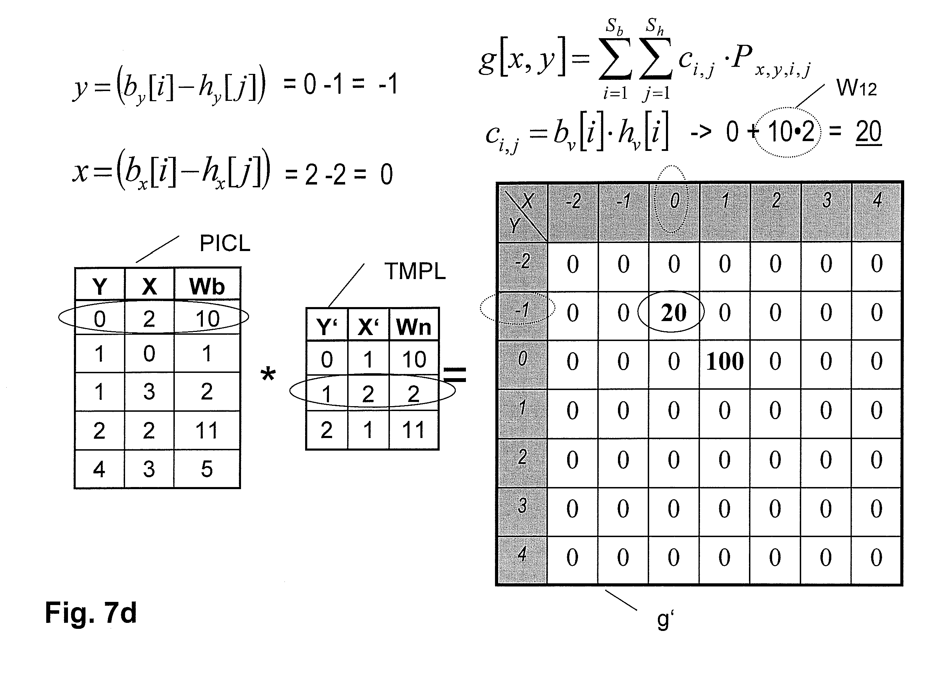

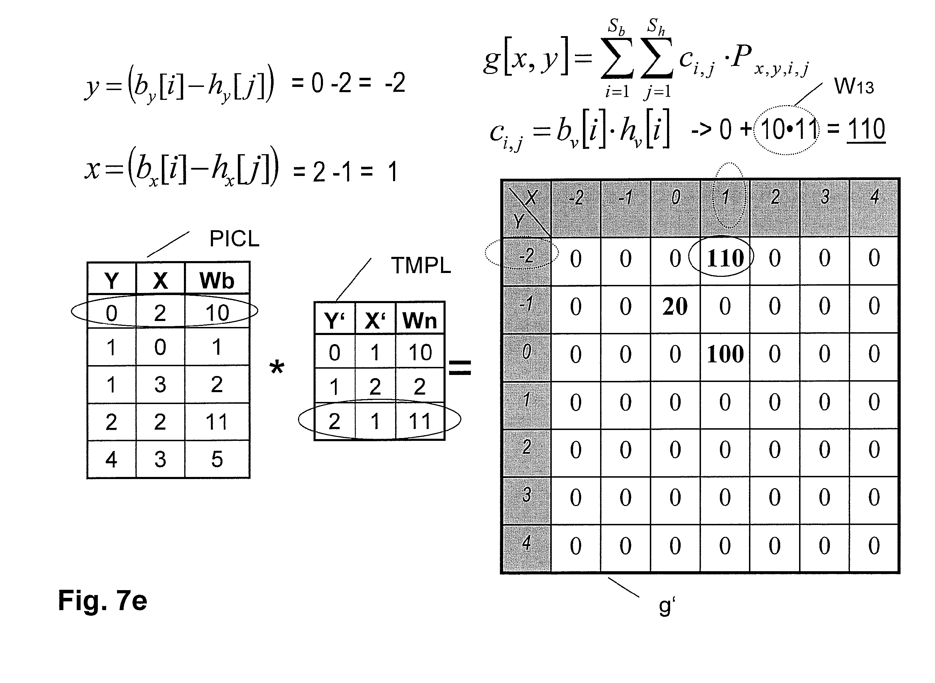

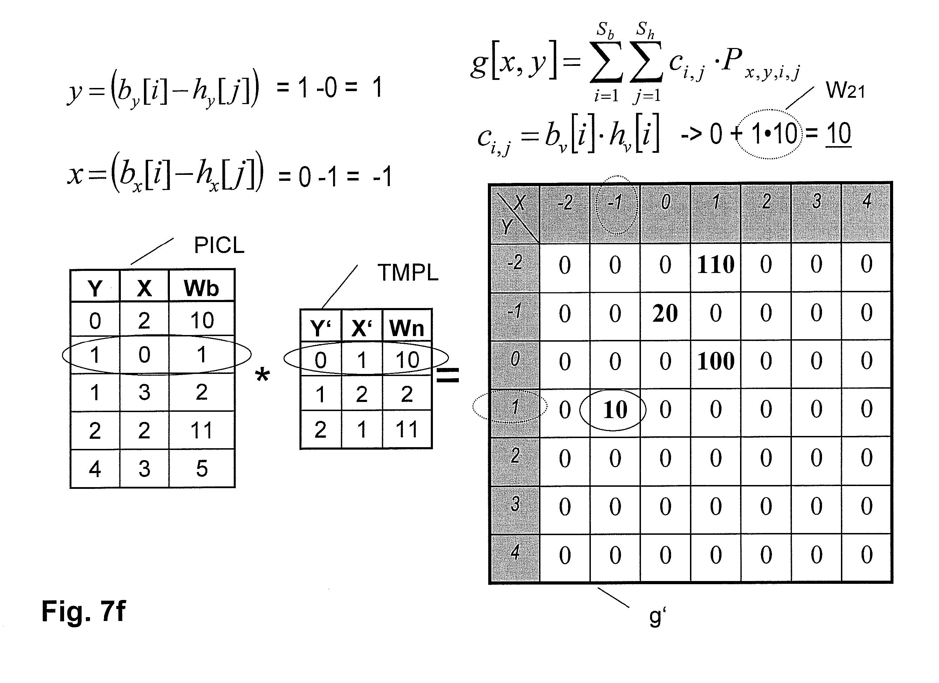

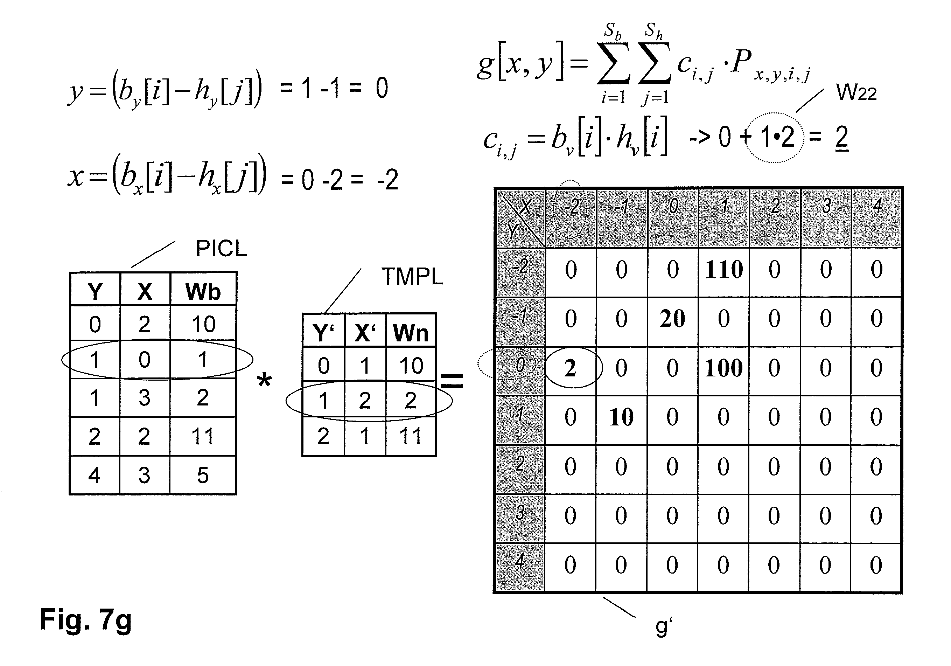

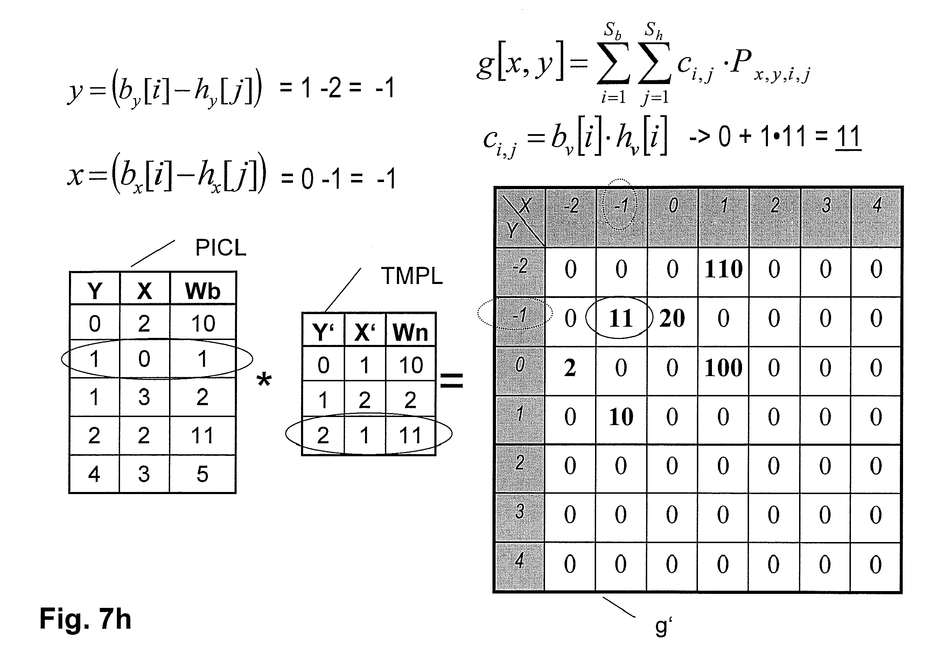

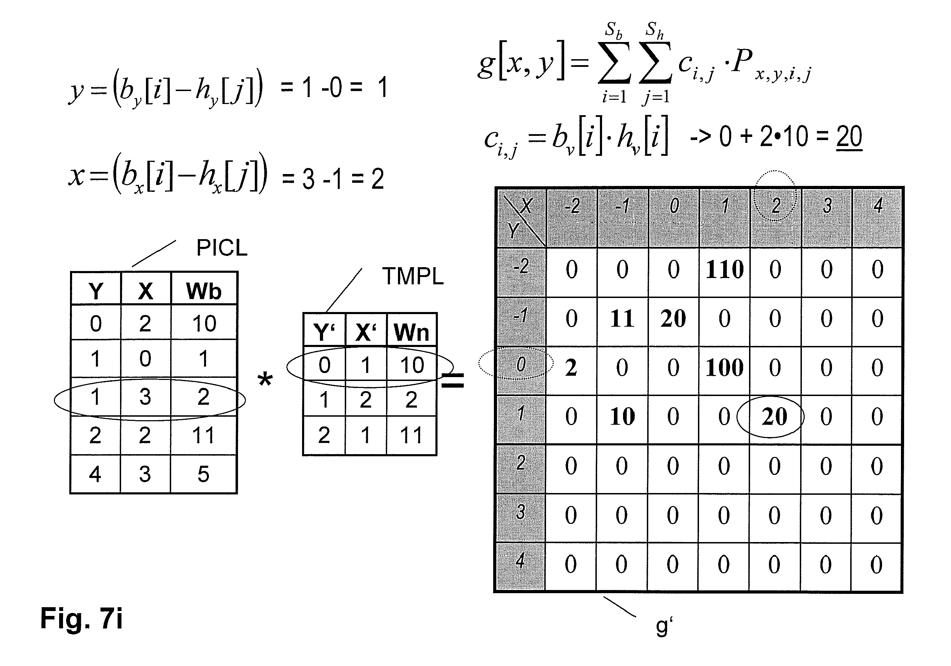

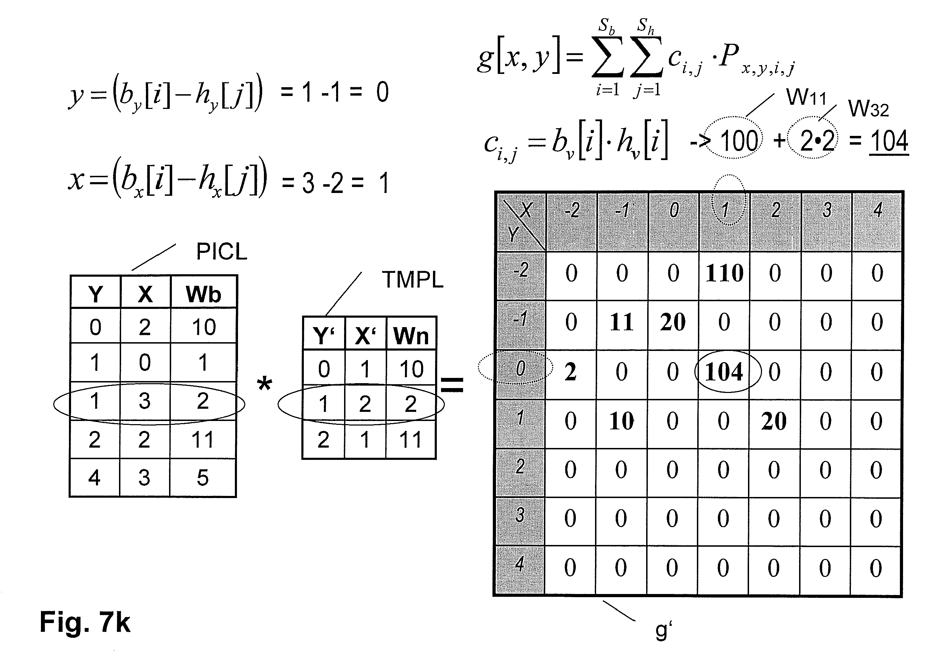

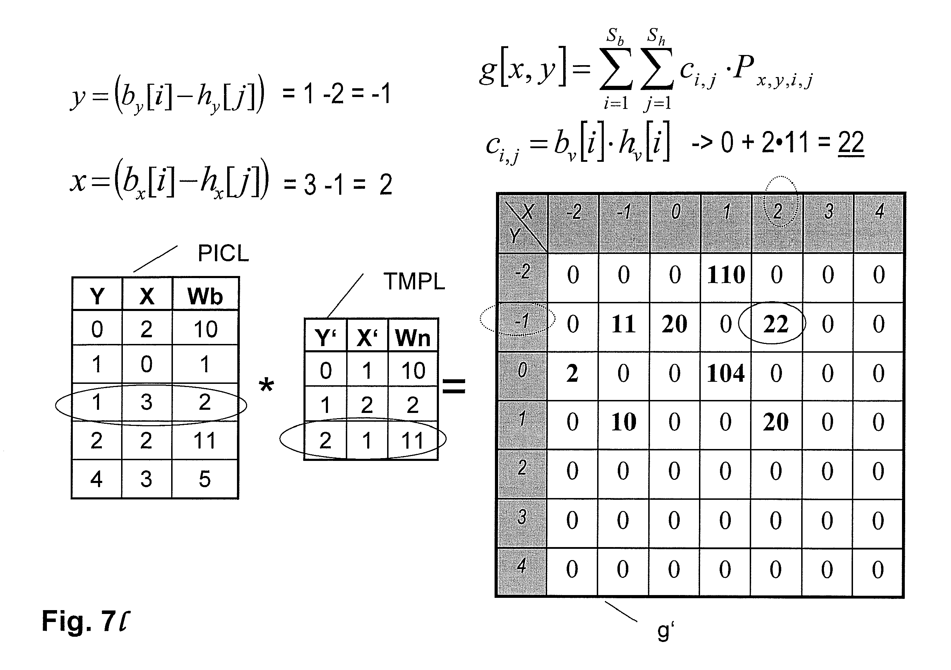

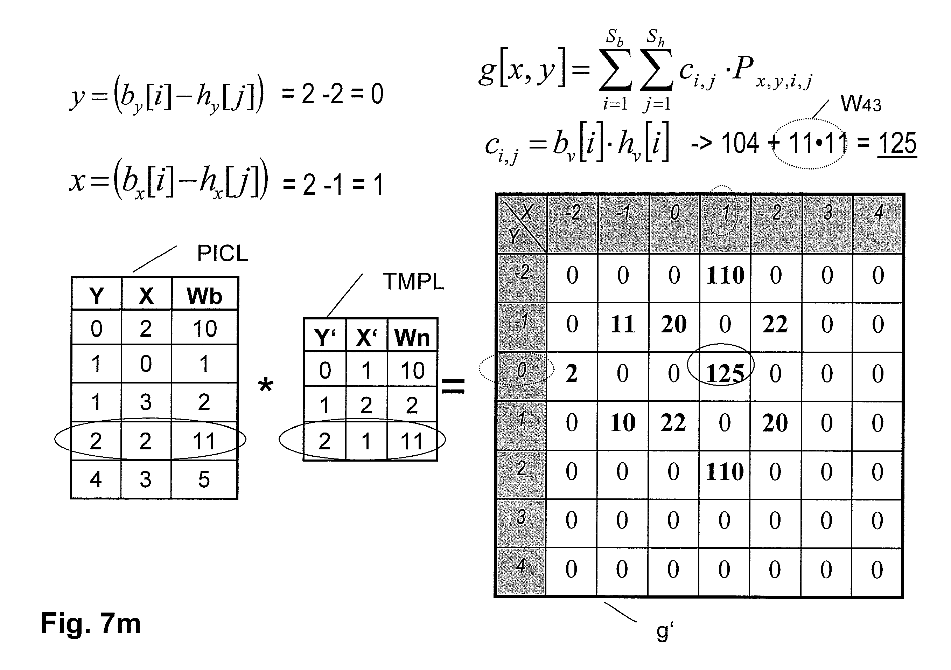

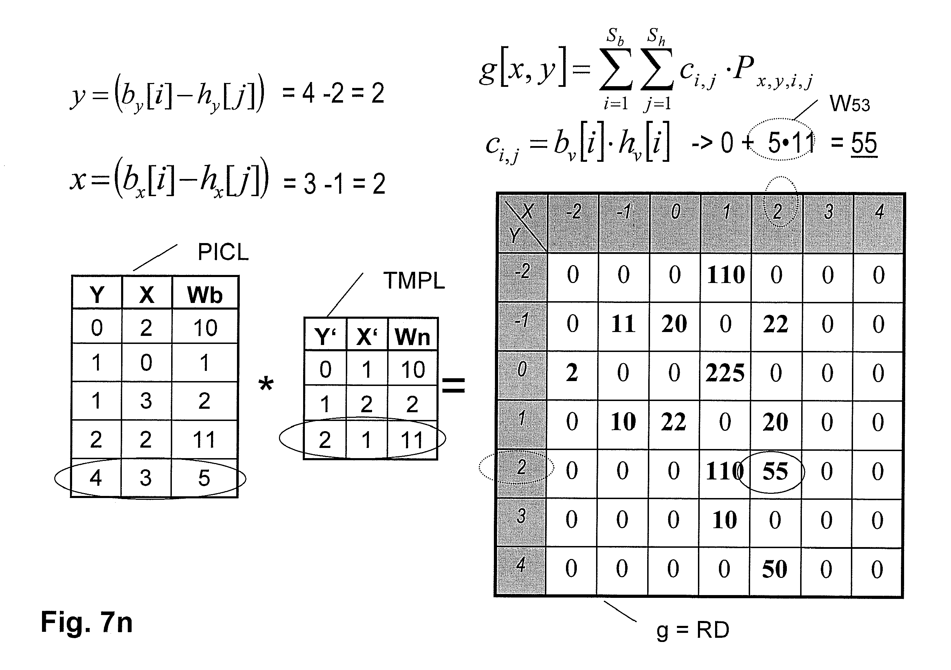

Die Fig. 7 a) bis k) verdeutlichen das Prinzip bzw. die konkrete Vorgehensweise der hier vorgeschlagenen Merkmalslisten-basierten Kreuzkorrelation:

Die Verknüpfung der beiden Listen PICL und TMPL erfolgt zeilenweise, wobei ausgehend von der ersten Zeile der Liste PICL, die dortigen Koordinaten X und Y sowie der Datenwert Wb mit den entsprechenden Angaben aus der ersten Zeile der Liste TMPL verknüpft werden; dann folgt die zweite und dritte Zeile der Liste TMPL. Danach geht es mit der zweiten Zeile der Liste PICL weiter, deren Angaben dann jeweils mit den Angaben aus der ersten, zweiten und dritten Zeile der Liste TMPL verknüpft werden. Dies geht so fort, bis alle Zeilen der Liste PICL mit denen der Liste TMPL verknüpft worden sind. Im gezeigten Beispiel hat die Liste PICL 5 Zeilen und die Liste TMPL 3 Zeilen, so dass insgesamt nur 5x3 = 15 Verknüpfungen zu berechnen sind. Dabei ist hervorzuheben, dass diese Rechenoperationen, die nachfolgend noch genauer beschrieben werden, parallelisiert auf mehrere beliebige Rechenkerne verteilt werden können und erst am Ende die einzelnen Zwischenergebnisse über ein Summationsglied bzw. Akkumulator zusammengeführt werden müssen, was in der Realisierung des vorgeschlagenen Verfahren eine sehr schnelle und leistungsstarke Bilderkennung bedeutet.

Die Fig. 7a)-c) zeigen den Anfang des Verfahrens, bei dem zunächst die Angaben aus der jeweils ersten Zeile beider Listen PICL und TMPL verknüpft werden. Zuerst wird aus den Koordinatenwerten der angegebenen Koordinaten-Paaren Y/X bzw. Y'/X' ein neues Koordinaten-Paar Y*/X* bestimmt, dass in der Ergebnisdatenmatrix RD diejenige Position angibt, an der ein erstes Zwischenergebnis W11 (siehe auch Zwischenergebnismatrix g') als Anteil bzw. Beitrag für das Korrelationsergebnis aufgrund der Verknüpfung der entsprechenden Datenwerte Wb mit Wh zu erwarten ist.

Die neuen Koordinatenwerte Y* und X* ergeben sich durch Subtraktion der jeweiligen Koordinatenwerte aus den Listen, nämlich wie folgt: Y* = Y-Y' und X* = X-X'.

Im gezeigten Beispiel nach Fig. 7a) - c) berechnet sich das erste neue Koordinaten-Paar zu: Y* = 0-0 = 0 und X* = 2-1 = 1. Damit ist die erste Position in der Ergebnisdatenmatrix bekannt. Das dort einzutragende Zwischenergebnis W11 (Anteil am Korrelationsergebnis W*) ergibt sich z.B. durch Multiplikation der beiden Datenwerte Wb und Wh aus den Listen PICL und TMPL (gemäß der Formel: W11 = Wb x Wh) und beträgt im gezeigten Beispiel 10x10 = 100. Dieser Wert ist also das erste Zwischenergebnis W11 und wird an der Y*/X*-Position 0/1 in die Ergebnisdatenmatrix RD eingetragen. Anstatt einer Multiplikation können auch Operationen mit beliebigen Abstandsmaßen, wie z.B. die absolute Differenz, verwendet werden oder es kann auch eine binäre Verknüpfung durchgeführt werden.

Wäre dort bereits ein Datenwert W* ungleich Null eingetragen (was am Anfang des Verfahrens nicht der Fall ist), so würde der Wert W11 als Anteil bzw. Beitrag zum Gesamtergebnis hinzuaddiert werden.

Die insbesondere in Fig. 7c dargestellten Formeln geben dabei folgendes an:

$$g[x,y] = \sum_{i=1}^{S_b} \sum_{j=1}^{S_h} c_{i,j} \cdot P_{x,y,i,j}$$

ist die Formel für die Berechnung des Ergebnisbildes bzw. der Ergebnisdatenmatrix. Diese setzt sich aus der Summation der einzelnen Zwischenergebnismatrizen g' zusammen und ergibt zum Schluss die gewünschte Ergebnisdatenmatrix RD (s. auch Fig. 7n). Insgesamt werden in Schritten, deren Anzahl durch die Listenlängen Sb bzw. Sh bestimmt ist, jeweils zeilenweise Zwischenergebnisse Cij berechnet und an der betreffenden Position in der Matrix g' zu dem vorherigen Wert hinzugefügt.

$$P_{x,y,i,j} = \delta\big(x - \big(b_x[i] - h_x[j]\big)\big) \cdot \delta\big(y - \big(b_y[i] - h_y[j]\big)\big)$$

entspricht einem Ausblendfaktor und dient der Positionsbestimmung im jeweiligen Zwischenschritt. Somit wird nur dann eine Rechenoperation durchgeführt, wenn an den betreffenden X- und Y-Positionen Datenwerte W ungleich Null vorkommen.

$$c_{i,j} = b_v[i] \cdot h_v[i]$$

gibt das Abstandsmaß an und entspricht somit dem jeweiligen Wert W, der hinzuzufügen ist, hier dem Wert W11 für die Position X=1 und Y=1.

Es geht dann schrittweise weiter, d.h. dass hier nun, wie in Fig. 7 d) gezeigt, eine Verknüpfung der Daten aus der ersten Zeile von PICL mit denen aus der zweiten Zeile von TMPL.

Daraus ergibt sich, dass in der Ergebnisdatenmatrix RD an der Y*/X*-Position -1/0 das Zwischenergebnis W12 = 20 eingetragen bzw. hinzugefügt werden muss.

Die Fig. 7 e) bis 7 i) veranschaulichen die nachfolgenden Schritte, bei denen Zeile für Zeile die Beiträge W13, W21, W22 ... als hinzuzufügende Zwischenergebnisse berechnet werden. Es wird an dem hier gezeigten Beispiel deutlich, dass ausschließlich Daten-Verknüpfung bzw. Rechenoperationen durchgeführt werden, die auch tatsächlich ein Zwischenergebnis ungleich Null als Beitrag für die Ergebnisdatenmatrix RD liefern. Das macht die Merkmalslisten-basierte Kreuzkorrelation sehr effizient. Zudem können die einzelnen Zwischenergebnisse in parallelen Rechenoperationen berechnet werden und brauchen erst zum Schluss durch eine einfache Summation zusammengeführt zu werden. Das erlaubt eine Realisierung durch eine parallele und damit schnelle Rechnerstruktur. Diese kann z.B. entsprechend der Zeilenanzahl der Musterdatenbildliste TMPL eine Rechnerstruktur mit N Rechenkernen, hier also mit 3 Rechenkernen, sein. Da N sich entsprechend der jeweils verwendeten Mustervorlage TMP bzw. deren Liste TMPL bestimmt und konstant bleibt, ist diese Aufteilung besonders gut zu realisieren. Es kann auch eine Struktur entsprechend der Zeilenanzahl M der Bilddatenliste PICL sein, wobei aber zu beachten ist, dass M nicht konstant ist. Auch sind weitere Aufteilungen denkbar.

Die Fig. 7 k) veranschaulicht im Vergleich zu den vorhergehenden Fig. 7 a)-i) ein für die Y*/X*-Position 0/1 berechnetes weiteres Zwischenergebnis W32 = 4 zu dem vorherigen Datenwert W* = W11 = 100 hinzu addiert wird und somit den neuen Datenwert W* = 104 ergibt.

Die Fig. 7 l) bis n) verdeutlichen die Weiterführung des Verfahrens bis hin zur Verknüpfung der letzten Zeile von PICL mit der letzten Zeile von TMPL, so dass sich zum Schluss dieselbe Ergebnisdatenmatrix RD ergibt, die über eine herkömmliche Kreuzkorrelation (s. Fig. 4) berechnet werden könnte, allerdings unter deutlich größerem Aufwand. Zudem könnte eine herkömmliche Kreuzkorrelation nicht durch parallelisierte Rechenoperationen bzw. -strukturen realisiert werden.

Durch die hier beschriebene Merkmalslisten-basierte Kreuzkorrelation ist es möglich, auch größere Bildaufnahmen besonders schnell zu verarbeiten. Denn die Merkmalslisten sind nicht im wesentlichen vom Datenumfang der jeweiligen Bildaufnahmen abhängig, sondern vielmehr vom Dateninhalt bzw. davon, ob und wie viele merkmalstypische Bildanteile vorhanden sind. Durch die hier vorgeschlagene Merkmalsextraktion können entsprechend kurze Listen erstellt werden ohne das Korrelationsergebnis negativ zu beeinflussen. Die Merkmalslisten-basierte Kreuzkorrelation selbst ist insbesondere bei kontraststarken und wenig verrauschten Bildern wesentlich schneller als eine herkömmliche Kreuzkorrelation. Durch die Anwendung der Merkmalslisten-basierte Kreuzkorrelation selbst ergibt sich keinerlei Verlust an Bildinformation. Das hier vorgestellte Verfahren weist insbesondere durch die Parallelisierbarkeit von Rechenstrukturen eine hohe Rechengeschwindigkeit auf. Diese ist im wesentlich nicht mehr (wie bei herkömmlichen Verfahren) von der Bildgröße abhängig, sondern vom Bildinhalt, insbesondere von der Anzahl der im Bild vorhandenen Merkmalspunkte.

Die Anwendung des Verfahrens ist besonders gut zur schnellen und sicheren Erkennung von Transportbehältnissen geeignet, so wie dies z.B. in Leergutrückgabesystemen bzw. -automaten erforderlich ist. Der Einsatz ist jedoch nicht auf solche Systeme, insbesondere nicht auf das Erkennen von Getränkekästen und/oder -flaschen beschränkt, sondern umfasst auch alle ähnlichen Systemen bzw. Automaten und darüber hinaus gehend alle damit vergleichbaren Anwendungsbereiche.

**Bezugszeichenliste**

BC       Transportbehältnis,
          hier in Gestalt eines Getränkekastens
LBL      grafische Kennzeichnung (Label bzw. Logo), hier als Schriftzug und Bildelement
PIC      digitale Bildaufnahme des Logos

PICD    Bilddatenmatrix
PICL    Bilddatenliste

TMP     optisches Erkennungsmerkmal (Musterbild bzw. Template)
TMPD    Musterbilddatenmatrix
TMPL    Musterbilddatenliste

RD      Ergebnisdatenmatrix
        (aus Summation der Zwischenergebnismatrizen g')

PIC*    Musterbildaufnahme und
FPIC*   Merkmalsbild zur Gewinnung des Erkennungsmerkmals (Template)

100     Verfahren mit Schrittfolgen 110-130

x, y    Koordinaten der Bilddatenmatrix PICD
x', y'  Koordinaten der Musterbilddatenmatrix TMPD
x*, y*  Koordinaten einer Ergebnisbilddatenmatrix RD

Wb      Datenwerte der Bilddatenmatrix PICD
Wh      Datenwerte der Musterbilddatenmatrix TMPD

W11, W12, W13...    Zwischenergebnissen (Anteile am Gesamtergebnis)
W*                 Datenwerte der Ergebnisbilddatenmatrix RD

**Patentansprüche**

1. Verfahren (100) zum Erkennen von Transportbehältnissen (BC), insbesondere Getränkekästen und/oder -flaschen, die jeweils mit mindestens einer grafischen Kennzeichnung (LBL) versehen sind, wobei das Verfahren (100) folgende Schritte aufweist:

   - zumindest von dem Teil des Transportbehältnisses (BC), der mit der grafischen Kennzeichnung (LBL) versehen ist, wird eine digitale Bildaufnahme (PIC) gemacht (Teilschritt 121);
   - mittels der digitalen Bildaufnahme (PIC) oder einer Bildverarbeitung davon wird eine Bilddatenmatrix (PICD) erstellt (Teilschritt 122);
   - aus der Bilddatenmatrix (PICD) wird eine Bilddatenliste (PICL) erstellt (Teilschritt 123);
   - mittels einer Merkmalslisten-basierten Kreuzkorrelation wird die Bilddatenliste (PICL) mit einer Musterdatenliste (TMPL) verknüpft, die eine Merkmalsliste für ein optisches Erkennungsmerkmal (TMP) repräsentiert, um zu prüfen, ob in der grafischen Kennzeichnung (LBL) das optische Erkennungsmerkmal (TMP) vorhanden ist (Schritt 130).

2. Verfahren (100) nach Anspruch 1, wobei aus der Bilddatenmatrix (PICD) die Bilddatenliste (PICL) erstellt (123) wird (Teilschritt 123), indem jeweils nur für solche Koordinaten-Paare (x, y) der Bilddatenmatrix (PICD) ein Eintrag in die Bilddatenliste (123) erfolgt, die einen Bildpunkt angeben, der einen Datenwert (Wb) ungleich Null aufweist.

3. Verfahren (100) nach Anspruch 1 oder 2, wobei mittels der Verknüpfung der Bilddatenliste (PICL) mit der Musterdatenliste (TMPL) eine Ergebnisdatenmatrix (RD) erstellt wird (Schritt 130), die gleich ist zu dem Ergebnis aus einer herkömmlichen Kreuzkorrelation der Bilddatenmatrix (PICD) mit einer Musterdatenmatrix (TMPD), aus der die Musterdatenliste (TMPL) erstellbar ist.

4. Verfahren (100) nach einem der vorhergehenden Ansprüche, wobei die Bilddatenliste (PICL) und die Musterdatenliste (TMPL) zeilen- oder spaltenweise Eintragungen aufweisen, die jeweils Koordinaten-Paare (x, y; x', y') und mindestens einen zugehörigen Datenwert (Wb, Wh) angeben.

5. Verfahren (100) nach Anspruch 4, wobei die Bilddatenliste (PICL) insbesondere zeilenweise mit der Musterdatenliste (TMPL) verknüpft wird, indem jeweils von den Koordinatenwerten eines Koordinaten-Paares (x, y) der Bilddatenliste (PICL) jeweils die Koordinatenwerte eines Koordinaten-Paares (x', y') der Musterdatenliste (TMPL) subtrahiert werden, um jeweils ein Koordinaten-Paar (x*, y*) in einer bzw. der Ergebnisdatenmatrix (RD) zu ermitteln, um dort einen Ergebnisdatenwert (W*) einzutragen, der durch Summation von Zwischenergebnissen (W11, W12, W13... W21, W22...) ermittelt wird, die sich jeweils aus einer Verknüpfung, insbesondere Multiplikation oder absoluter Differenzbildung, des jeweiligen Datenwertes (Wb) aus der Bilddatenliste (PICL) mit dem entsprechenden Datenwert (Wh) aus der Musterdatenliste (TMPL) ergeben (Schritt 130).

6. Verfahren (100) nach Anspruch 5, wobei die Zwischenergebnisse (W11, W12, W13... W21, W22...) zeitgleich über parallelisierte Rechenwege ermittelt werden (Teilschritt 131) und anschließend die Zwischenergebnisse (W11, W12, W13... W21, W22...) zur Ermittlung der Ergebnisdatenwerte (W*) zusammengeführt, insbesondere addiert, werden (Teilschritt 132).

7. Verfahren nach einem der vorhergehenden Ansprüche, wobei die Bildverarbeitung zur Erstellung der Bilddatenmatrix (PICD) eine Merkmalsextraktion, insbesondere eine Kantendetektion, der Bilddaten der digitalen Bildaufnahme (PIC) umfasst (Teilschritt 122).

8. Verfahren nach einem der vorhergehenden Ansprüche, wobei die Musterdatenliste (TMPL) mittels einer Extraktion von Bilddaten aus einer Mustervorlage für die grafische Kennzeichnung (LBL) oder aus der jeweils vorliegenden grafischen Kennzeichnung (LBL) selbst erzeugt wird (Schritt 110).

9. Verfahren nach Anspruch 8, wobei die Erzeugung der Musterdatenliste (TMPL) mindestens einen der folgenden Schritte umfasst:

- von der Mustervorlage bzw. der grafischen Kennzeichnung (LBL) selbst wird eine Musteraufnahme (PIC*) gemacht (Teilschritt 111);
- die Musteraufnahme (PIC*) wird einer Mittelung bzw. Filterung unterzogen (Teilschritt 112);
- aus der insbesondere gemittelten Musteraufnahme (PIC*) wird mittels einer Kantendetektion ein Merkmalsbild (FPIC*) erstellt (Teilschritt 113);
- aus dem Merkmalsbild (FPIC*) wird das Erkennungsmerkmal (TMP) extrahiert (Teilschritt 114) und eine entsprechende Musterbilddatenmatrix (TMPD) erstellt,
- aus der Musterbilddatenmatrix (TMPD) wird die Musterbilddatenliste (TMPD) erstellt (Teilschritt 114), indem jeweils nur für solche Koordinaten-Paare (x', y') der Musterbilddatenmatrix (TMPD) ein Eintrag in die Musterbilddatenliste (TMPD) erfolgt, die einen Bildpunkt angeben, der einen Datenwert (Wh) ungleich Null aufweist.

10. Vorrichtung zum Erkennen eines Transportbehältnisses (BC), insbesondere von Leergut, das mit mindestens einer grafischen Kennzeichnung (LBL) versehen ist, wobei die Vorrichtung mindestens eine Kamera aufweist mit der zumindest von dem Teil des Transportbehältnisses (BC), der mit der grafischen Kennzeichnung (LBL) versehen ist, eine digitale Bildaufnahme (PIC) gemacht wird; und Rechenmittel aufweist, die mittels der digitalen Bildaufnahme (PIC) oder einer Bildverarbeitung davon eine Bilddatenmatrix (PICD) erstellt, die aus der Bilddatenmatrix (PICD) eine Bilddatenliste (PICL) erstellt, und die mittels einer Merkmalslisten-basierten Kreuzkorrelation die Bilddatenliste (PICL) mit einer Musterdatenliste (TMPL) verknüpft, die eine Merkmalsliste für ein optisches Erkennungsmerkmal (TMP) repräsentiert, um zu prüfen, ob in der grafischen Kennzeichnung (LBL) das optische Erkennungsmerkmal (TMP) vorhanden ist.

11. Vorrichtung nach Anspruch 10, **dadurch gekennzeichnet, dass** die Vorrichtung ein Leergutrückgabeautomat ist, der Transportbehältnisse in Gestalt von Getränkekästen und/oder -flaschen erkennt.

Fig. 1

110

121

122

123

120

131

132

130

100

TMPL

TMP

| Y-Pos | X-Pos | Wert |
|---|---|---|
| 0 | 1 | 10 |
| 1 | 2 | 2 |
| 2 | 1 | 11 |

PIC

HORNECKER

PICD

|  | 0 | 1 | 2 | 3 | 4 |
|---|---|---|---|---|---|
| 0 | 0 | 0 | 10 | 0 | 0 |
| 1 | 1 | 0 | 0 | 2 | 0 |
| 2 | 0 | 0 | 11 | 0 | 0 |
| 3 | 0 | 0 | 0 | 0 | 0 |
| 4 | 0 | 0 | 0 | 5 | 0 |

PICL

| Y-Pos | X-Pos | Wert |
|---|---|---|
| 0 | 2 | 10 |
| 1 | 0 | 1 |
| 1 | 3 | 2 |
| 2 | 2 | 11 |
| 4 | 3 | 5 |

## Fig. 2a

Fig. 2b

100

PIC*

FPIC*

TMP

**Fig. 3**

**PICD**

| y \ x | 0 | 1 | 2 | 3 | 4 |
|---|---|---|---|---|---|
| 0 | 0 | 0 | 10 | 0 | 0 |
| 1 | 1 | 0 | 0 | 2 | 0 |
| 2 | 0 | 0 | 11 | 0 | 0 |
| 3 | 0 | 0 | 0 | 0 | 0 |
| 4 | 0 | 0 | 0 | 5 | 0 |

$*$

**TMPD**

| | | |
|---|---|---|
| 0 | 10 | 0 |
| 0 | 0 | 2 |
| 0 | 11 | 0 |

$=$

**RD**

| | | | | | | |
|---|---|---|---|---|---|---|
| 0 | 0 | 0 | 110 | 0 | 0 | 0 |
| 0 | 11 | 20 | 0 | 22 | 0 | 0 |
| 2 | 0 | 0 | 225 | 0 | 0 | 0 |
| 0 | 10 | 22 | 0 | 20 | 0 | 0 |
| 0 | 0 | 0 | 110 | 55 | 0 | 0 |
| 0 | 0 | 0 | 10 | 0 | 0 | 0 |
| 0 | 0 | 0 | 0 | 50 | 0 | 0 |

**Fig. 4**

Fig. 5

PICL

| Y | X | Wb |
|---|---|----|
| 0 | 2 | 10 |
| 1 | 0 | 1 |
| 1 | 3 | 2 |
| 2 | 2 | 11 |
| 4 | 3 | 5 |

**\***

TMPL

| Y' | X' | Wn |
|----|----|----|
| 0 | 1 | 10 |
| 1 | 2 | 2 |
| 2 | 1 | 11 |

**=**

RD    W*

| 0 | 0 | 0 | 110 | 0 | 0 | 0 |
|---|---|---|-----|---|---|---|
| 0 | 11 | 20 | 0 | 22 | 0 | 0 |
| 2 | 0 | 0 | 225 | 0 | 0 | 0 |
| 0 | 10 | 22 | 0 | 20 | 0 | 0 |
| 0 | 0 | 0 | 110 | 55 | 0 | 0 |
| 0 | 0 | 0 | 10 | 0 | 0 | 0 |
| 0 | 0 | 0 | 0 | 50 | 0 | 0 |

**Fig. 6**

$$y = \left(b_y[i] - h_y[j]\right) = 0 - 0 = \underline{0} \qquad\qquad g[x,y] = \sum_{i=1}^{S_b}\sum_{j=1}^{S_h} c_{i,j} \cdot P_{x,y,i,j}$$

PICL

| Y | X | Wb |
|---|---|----|
| 0 | 2 | 10 |
| 1 | 0 | 1 |
| 1 | 3 | 2 |
| 2 | 2 | 11 |
| 4 | 3 | 5 |

*

TMPL

| Y' | X' | Wn |
|----|----|----|
| 0  | 1  | 10 |
| 1  | 2  | 2  |
| 2  | 1  | 11 |

=

g'

| X / Y | -2 | -1 | 0 | 1 | 2 | 3 | 4 |
|-------|----|----|---|---|---|---|---|
| -2 | 0 | 0 | 0 | 0 | 0 | 0 | 0 |
| -1 | 0 | 0 | 0 | 0 | 0 | 0 | 0 |
| 0  | 0 | 0 | 0 | 0 | 0 | 0 | 0 |
| 1  | 0 | 0 | 0 | 0 | 0 | 0 | 0 |
| 2  | 0 | 0 | 0 | 0 | 0 | 0 | 0 |
| 3  | 0 | 0 | 0 | 0 | 0 | 0 | 0 |
| 4  | 0 | 0 | 0 | 0 | 0 | 0 | 0 |

**Fig. 7a**

$$y = \big(b_y[i] - h_y[j]\big) = 0$$

$$g[x,y] = \sum_{i=1}^{S_b}\sum_{j=1}^{S_h} c_{i,j} \cdot P_{x,y,i,j}$$

$$x = \big(b_x[i] - h_x[j]\big) = 2 - 1 = \underline{1}$$

PICL

| Y | X | Wb |
|---|---|----|
| 0 | 2 | 10 |
| 1 | 0 | 1 |
| 1 | 3 | 2 |
| 2 | 2 | 11 |
| 4 | 3 | 5 |

*

TMPL

| Y' | X' | Wn |
|----|----|----|
| 0 | 1 | 10 |
| 1 | 2 | 2 |
| 2 | 1 | 11 |

=

g'

| X \ Y | -2 | -1 | 0 | 1 | 2 | 3 | 4 |
|-------|----|----|----|----|----|----|----|
| -2 | 0 | 0 | 0 | 0 | 0 | 0 | 0 |
| -1 | 0 | 0 | 0 | 0 | 0 | 0 | 0 |
| 0 | 0 | 0 | 0 | 0 | 0 | 0 | 0 |
| 1 | 0 | 0 | 0 | 0 | 0 | 0 | 0 |
| 2 | 0 | 0 | 0 | 0 | 0 | 0 | 0 |
| 3 | 0 | 0 | 0 | 0 | 0 | 0 | 0 |
| 4 | 0 | 0 | 0 | 0 | 0 | 0 | 0 |

**Fig. 7b**

EP 2 138 242 A2

$$y = \left(b_y[i] - h_y[j]\right) = 0$$

$$g[x,y] = \sum_{i=1}^{S_b} \sum_{j=1}^{S_h} c_{i,j} \cdot P_{x,y,i,j} \qquad c_{i,j} = b_v[i] \cdot h_v[i]$$

$$P_{x,y,i,j} = \delta\left(x - \left(b_x[i] - h_x[j]\right)\right) \cdot \delta\left(y - \left(b_y[i] - h_y[j]\right)\right)$$

$$x = \left(b_x[i] - h_x[j]\right) = 1$$

$$\rightarrow \quad 0 + 10 \cdot 10 = \underline{100} \qquad W_{11}$$

PICL

| Y | X | Wb |
|---|---|-----|
| 0 | 2 | 10 |
| 1 | 0 | 1 |
| 1 | 3 | 2 |
| 2 | 2 | 11 |
| 4 | 3 | 5 |

$*$

TMPL

| Y' | X' | Wn |
|----|----|-----|
| 0 | 1 | 10 |
| 1 | 2 | 2 |
| 2 | 1 | 11 |

$=$

| X \ Y | -2 | -1 | 0 | 1 | 2 | 3 | 4 |
|-------|----|----|----|----|----|----|----|
| -2 | 0 | 0 | 0 | 0 | 0 | 0 | 0 |
| -1 | 0 | 0 | 0 | 0 | 0 | 0 | 0 |
| 0 | 0 | 0 | 0 | 100 | 0 | 0 | 0 |
| 1 | 0 | 0 | 0 | 0 | 0 | 0 | 0 |
| 2 | 0 | 0 | 0 | 0 | 0 | 0 | 0 |
| 3 | 0 | 0 | 0 | 0 | 0 | 0 | 0 |
| 4 | 0 | 0 | 0 | 0 | 0 | 0 | 0 |

g'

**Fig. 7c**

$$g[x,y] = \sum_{i=1}^{s_b}\sum_{j=1}^{s_h} c_{i,j} \cdot P_{x,y,i,j}$$

$$c_{i,j} = b_v[i]\cdot h_v[i] \;\to\; 0 + 10\cdot2 = \underline{20}$$

W12

| X\Y | -2 | -1 | 0 | 1 | 2 | 3 | 4 |
|---|---|---|---|---|---|---|---|
| -2 | 0 | 0 | 0 | 0 | 0 | 0 | 0 |
| -1 | 0 | 0 | 20 | 0 | 0 | 0 | 0 |
| 0 | 0 | 0 | 100 | 0 | 0 | 0 | 0 |
| 1 | 0 | 0 | 0 | 0 | 0 | 0 | 0 |
| 2 | 0 | 0 | 0 | 0 | 0 | 0 | 0 |
| 3 | 0 | 0 | 0 | 0 | 0 | 0 | 0 |
| 4 | 0 | 0 | 0 | 0 | 0 | 0 | 0 |

g'

$$y = (b_y[i] - h_y[j]) = 0 - 1 = -1$$

$$x = (b_x[i] - h_x[j]) = 2 - 2 = 0$$

TMPL

| Y' | X' | Wn |
|---|---|---|
| 0 | 1 | 10 |
| 1 | 2 | 2 |
| 2 | 1 | 11 |

=

*

PICL

| Y | X | Wb |
|---|---|---|
| 0 | 2 | 10 |
| 1 | 0 | 1 |
| 1 | 3 | 2 |
| 2 | 2 | 11 |
| 4 | 3 | 5 |

**Fig. 7d**

EP 2 138 242 A2

$$y = \left(b_y[i] - h_y[j]\right) = 0 - 2 = -2$$

$$x = \left(b_x[i] - h_x[j]\right) = 2 - 1 = 1$$

$$g[x,y] = \sum_{i=1}^{S_b} \sum_{j=1}^{S_h} c_{i,j} \cdot P_{x,y,i,j}$$

$$c_{i,j} = b_v[i] \cdot h_v[i] \quad \to 0 + \underbrace{10 \cdot 11}_{W_{13}} = \underline{110}$$

PICL

| Y | X | Wb |
|---|---|----|
| 0 | 2 | 10 |
| 1 | 0 | 1 |
| 1 | 3 | 2 |
| 2 | 2 | 11 |
| 4 | 3 | 5 |

**\***

TMPL

| Y' | X' | Wn |
|----|----|----|
| 0  | 1  | 10 |
| 1  | 2  | 2  |
| 2  | 1  | 11 |

**=**

g'

| X／Y | -2 | -1 | 0 | 1 | 2 | 3 | 4 |
|------|----|----|----|-----|----|----|----|
| -2   | 0  | 0  | 0  | **110** | 0 | 0 | 0 |
| -1   | 0  | 0  | **20** | 0 | 0 | 0 | 0 |
| 0    | 0  | 0  | 0  | **100** | 0 | 0 | 0 |
| 1    | 0  | 0  | 0  | 0 | 0 | 0 | 0 |
| 2    | 0  | 0  | 0  | 0 | 0 | 0 | 0 |
| 3    | 0  | 0  | 0  | 0 | 0 | 0 | 0 |
| 4    | 0  | 0  | 0  | 0 | 0 | 0 | 0 |

**Fig. 7e**

$$y = \left(b_y[i] - h_y[j]\right) = 1 - 0 = 1$$

$$x = \left(b_x[i] - h_x[j]\right) = 0 - 1 = -1$$

$$g[x,y] = \sum_{i=1}^{S_b} \sum_{j=1}^{S_h} c_{i,j} \cdot P_{x,y,i,j}$$

$$c_{i,j} = b_v[i] \cdot h_v[i] \quad \rightarrow 0 + 1 \cdot 10 = \underline{10} \quad \text{W21}$$

PICL

| Y | X | Wb |
|---|---|----|
| 0 | 2 | 10 |
| 1 | 0 | 1  |
| 1 | 3 | 2  |
| 2 | 2 | 11 |
| 4 | 3 | 5  |

*

TMPL

| Y' | X' | Wn |
|----|----|----|
| 0  | 1  | 10 |
| 1  | 2  | 2  |
| 2  | 1  | 11 |

=

| X \ Y | -2 | -1 | 0 | 1 | 2 | 3 | 4 |
|-------|----|----|----|-----|----|----|----|
| -2 | 0 | 0 | 0 | 110 | 0 | 0 | 0 |
| -1 | 0 | 0 | 20 | 0 | 0 | 0 | 0 |
| 0 | 0 | 0 | 0 | 100 | 0 | 0 | 0 |
| 1 | 0 | 10 | 0 | 0 | 0 | 0 | 0 |
| 2 | 0 | 0 | 0 | 0 | 0 | 0 | 0 |
| 3 | 0 | 0 | 0 | 0 | 0 | 0 | 0 |
| 4 | 0 | 0 | 0 | 0 | 0 | 0 | 0 |

g'

**Fig. 7f**

EP 2 138 242 A2

$$y = \left(b_y[i] - h_y[j]\right) = 1 - 1 = 0$$

$$x = \left(b_x[i] - h_x[j]\right) = 0 - 2 = -2$$

$$g[x,y] = \sum_{i=1}^{S_b} \sum_{j=1}^{S_h} c_{i,j} \cdot P_{x,y,i,j}$$

W22

$$c_{i,j} = b_v[i] \cdot h_v[i] \quad -> 0 + 1 \cdot 2 = \underline{2}$$

PICL

| Y | X | Wb |
|---|---|----|
| 0 | 2 | 10 |
| 1 | 0 | 1 |
| 1 | 3 | 2 |
| 2 | 2 | 11 |
| 4 | 3 | 5 |

*

TMPL

| Y' | X' | Wn |
|----|----|----|
| 0 | 1 | 10 |
| 1 | 2 | 2 |
| 2 | 1 | 11 |

=

| X＼Y | -2 | -1 | 0 | 1 | 2 | 3 | 4 |
|-----|----|----|----|----|----|----|----|
| -2 | 0 | 0 | 0 | 110 | 0 | 0 | 0 |
| -1 | 0 | 0 | 20 | 0 | 0 | 0 | 0 |
| 0 | 2 | 0 | 0 | 100 | 0 | 0 | 0 |
| 1 | 0 | 10 | 0 | 0 | 0 | 0 | 0 |
| 2 | 0 | 0 | 0 | 0 | 0 | 0 | 0 |
| 3 | 0 | 0 | 0 | 0 | 0 | 0 | 0 |
| 4 | 0 | 0 | 0 | 0 | 0 | 0 | 0 |

g'

**Fig. 7g**

$$y = \left( b_y[i] - h_y[j] \right) = 1 - 2 = -1$$

$$x = \left( b_x[i] - h_x[j] \right) = 0 - 1 = -1$$

$$g[x,y] = \sum_{i=1}^{S_b} \sum_{j=1}^{S_h} c_{i,j} \cdot P_{x,y,i,j}$$

$$c_{i,j} = b_v[i] \cdot h_v[i] \quad \rightarrow 0 + 1 \cdot 11 = \underline{11}$$

PICL

| Y | X | Wb |
|---|---|----|
| 0 | 2 | 10 |
| 1 | 0 | 1 |
| 1 | 3 | 2 |
| 2 | 2 | 11 |
| 4 | 3 | 5 |

*

TMPL

| Y' | X' | Wn |
|----|----|----|
| 0  | 1  | 10 |
| 1  | 2  | 2  |
| 2  | 1  | 11 |

=

| X \ Y | -2 | -1 | 0 | 1 | 2 | 3 | 4 |
|-------|-----|-----|-----|------|-----|-----|-----|
| -2 | 0 | 0 | 0 | 110 | 0 | 0 | 0 |
| -1 | 0 | 11 | 20 | 0 | 0 | 0 | 0 |
| 0 | 2 | 0 | 0 | 100 | 0 | 0 | 0 |
| 1 | 0 | 10 | 0 | 0 | 0 | 0 | 0 |
| 2 | 0 | 0 | 0 | 0 | 0 | 0 | 0 |
| 3 | 0 | 0 | 0 | 0 | 0 | 0 | 0 |
| 4 | 0 | 0 | 0 | 0 | 0 | 0 | 0 |

g'

**Fig. 7h**

EP 2 138 242 A2

$$y = \left(b_y[i] - h_y[j]\right) = 1 - 0 = 1$$

$$x = \left(b_x[i] - h_x[j]\right) = 3 - 1 = 2$$

$$g[x,y] = \sum_{i=1}^{S_b} \sum_{j=1}^{S_h} c_{i,j} \cdot P_{x,y,i,j}$$

$$c_{i,j} = b_v[i] \cdot h_v[i] \quad \rightarrow 0 + 2 \cdot 10 = \underline{20}$$

PICL

| Y | X | Wb |
|---|---|----|
| 0 | 2 | 10 |
| 1 | 0 | 1  |
| 1 | 3 | 2  |
| 2 | 2 | 11 |
| 4 | 3 | 5  |

\*

TMPL

| Y' | X' | Wn |
|----|----|----|
| 0  | 1  | 10 |
| 1  | 2  | 2  |
| 2  | 1  | 11 |

=

| X \ Y | -2 | -1 | 0 | 1 | 2 | 3 | 4 |
|-------|----|----|---|---|---|---|---|
| -2 | 0 | 0 | 0 | 110 | 0 | 0 | 0 |
| -1 | 0 | 11 | 20 | 0 | 0 | 0 | 0 |
| 0 | 2 | 0 | 0 | 100 | 0 | 0 | 0 |
| 1 | 0 | 10 | 0 | 0 | 20 | 0 | 0 |
| 2 | 0 | 0 | 0 | 0 | 0 | 0 | 0 |
| 3 | 0 | 0 | 0 | 0 | 0 | 0 | 0 |
| 4 | 0 | 0 | 0 | 0 | 0 | 0 | 0 |

g'

**Fig. 7i**

EP 2 138 242 A2

$$y = \left(b_y[i] - h_y[j]\right) = 1 - 1 = 0$$

$$x = \left(b_x[i] - h_x[j]\right) = 3 - 2 = 1$$

$$g[x,y] = \sum_{i=1}^{S_b} \sum_{j=1}^{S_h} c_{i,j} \cdot P_{x,y,i,j}$$

$$c_{i,j} = b_v[i] \cdot h_v[i] \;\; \text{-> } \underset{W_{11}}{100} + \underset{W_{32}}{2 \cdot 2} = \underline{104}$$

PICL

| Y | X | Wb |
|---|---|----|
| 0 | 2 | 10 |
| 1 | 0 | 1 |
| 1 | 3 | 2 |
| 2 | 2 | 11 |
| 4 | 3 | 5 |

$*$

TMPL

| Y' | X' | Wn |
|----|----|----|
| 0 | 1 | 10 |
| 1 | 2 | 2 |
| 2 | 1 | 11 |

$=$

| X \ Y | -2 | -1 | 0 | 1 | 2 | 3 | 4 |
|-------|----|----|---|---|---|---|---|
| -2 | 0 | 0 | 0 | 110 | 0 | 0 | 0 |
| -1 | 0 | 11 | 20 | 0 | 0 | 0 | 0 |
| 0 | 2 | 0 | 0 | 104 | 0 | 0 | 0 |
| 1 | 0 | 10 | 0 | 0 | 20 | 0 | 0 |
| 2 | 0 | 0 | 0 | 0 | 0 | 0 | 0 |
| 3 | 0 | 0 | 0 | 0 | 0 | 0 | 0 |
| 4 | 0 | 0 | 0 | 0 | 0 | 0 | 0 |

g'

**Fig. 7k**

$$y = \left(b_y[i] - h_y[j]\right) = 1 - 2 = -1$$

$$x = \left(b_x[i] - h_x[j]\right) = 3 - 1 = 2$$

$$g[x, y] = \sum_{i=1}^{S_b} \sum_{j=1}^{S_h} c_{i,j} \cdot P_{x,y,i,j}$$

$$c_{i,j} = b_v[i] \cdot h_v[i] \quad \to 0 + 2 \cdot 11 = \underline{22}$$

PICL

| Y | X | Wb |
|---|---|----|
| 0 | 2 | 10 |
| 1 | 0 | 1  |
| 1 | 3 | 2  |
| 2 | 2 | 11 |
| 4 | 3 | 5  |

*

TMPL

| Y' | X' | Wn |
|----|----|----|
| 0  | 1  | 10 |
| 1  | 2  | 2  |
| 2  | 1  | 11 |

=

| X \ Y | -2 | -1 | 0 | 1 | 2 | 3 | 4 |
|-------|----|----|----|----|----|----|----|
| -2 | 0 | 0 | 0 | 110 | 0 | 0 | 0 |
| -1 | 0 | 11 | 20 | 0 | 22 | 0 | 0 |
| 0 | 2 | 0 | 0 | 104 | 0 | 0 | 0 |
| 1 | 0 | 10 | 0 | 0 | 20 | 0 | 0 |
| 2 | 0 | 0 | 0 | 0 | 0 | 0 | 0 |
| 3 | 0 | 0 | 0 | 0 | 0 | 0 | 0 |
| 4 | 0 | 0 | 0 | 0 | 0 | 0 | 0 |

g'

**Fig. 7***l*

EP 2 138 242 A2

$$y = \left(b_y[i] - h_y[j]\right) = 2 - 2 = 0$$

$$x = \left(b_x[i] - h_x[j]\right) = 2 - 1 = 1$$

$$g[x,y] = \sum_{i=1}^{S_b} \sum_{j=1}^{S_h} c_{i,j} \cdot P_{x,y,i,j}$$

$$c_{i,j} = b_v[i] \cdot h_v[i] \quad \rightarrow \quad 104 + 11 \cdot 11 = \underline{125}$$

W43

PICL

| Y | X | Wb |
|---|---|----|
| 0 | 2 | 10 |
| 1 | 0 | 1 |
| 1 | 3 | 2 |
| 2 | 2 | 11 |
| 4 | 3 | 5 |

*

TMPL

| Y' | X' | Wn |
|----|----|----|
| 0  | 1  | 10 |
| 1  | 2  | 2  |
| 2  | 1  | 11 |

=

| X \ Y | -2 | -1 | 0 | 1 | 2 | 3 | 4 |
|-------|----|----|----|----|----|----|----|
| -2 | 0 | 0 | 0 | 110 | 0 | 0 | 0 |
| -1 | 0 | 11 | 20 | 0 | 22 | 0 | 0 |
| 0 | 2 | 0 | 0 | 125 | 0 | 0 | 0 |
| 1 | 0 | 10 | 22 | 0 | 20 | 0 | 0 |
| 2 | 0 | 0 | 0 | 110 | 0 | 0 | 0 |
| 3 | 0 | 0 | 0 | 0 | 0 | 0 | 0 |
| 4 | 0 | 0 | 0 | 0 | 0 | 0 | 0 |

g'

**Fig. 7m**

$$y = \left(b_y[i] - h_y[j]\right) = 4 - 2 = 2$$

$$x = \left(b_x[i] - h_x[j]\right) = 3 - 1 = 2$$

$$g[x,y] = \sum_{i=1}^{S_b} \sum_{j=1}^{S_h} c_{i,j} \cdot P_{x,y,i,j}$$

W53

$$c_{i,j} = b_v[i] \cdot h_v[i] \quad \rightarrow 0 + 5 \cdot 11 = \underline{55}$$

PICL

| Y | X | Wb |
|---|---|----|
| 0 | 2 | 10 |
| 1 | 0 | 1 |
| 1 | 3 | 2 |
| 2 | 2 | 11 |
| 4 | 3 | 5 |

*

TMPL

| Y' | X' | Wn |
|----|----|----|
| 0 | 1 | 10 |
| 1 | 2 | 2 |
| 2 | 1 | 11 |

=

| X / Y | -2 | -1 | 0 | 1 | 2 | 3 | 4 |
|-------|----|----|----|-----|----|----|----|
| -2 | 0 | 0 | 0 | 110 | 0 | 0 | 0 |
| -1 | 0 | 11 | 20 | 0 | 22 | 0 | 0 |
| 0 | 2 | 0 | 0 | 225 | 0 | 0 | 0 |
| 1 | 0 | 10 | 22 | 0 | 20 | 0 | 0 |
| 2 | 0 | 0 | 0 | 110 | 55 | 0 | 0 |
| 3 | 0 | 0 | 0 | 10 | 0 | 0 | 0 |
| 4 | 0 | 0 | 0 | 0 | 50 | 0 | 0 |

g = RD

**Fig. 7n**